# EUROPÄISCHE PATENTANMELDUNG

(11) **EP 2 500 331 A2**
(43) Veröffentlichungstag der Anmeldung: **19.09.2012**
(21) Anmeldenummer: 12169961.5
(22) Anmeldetag: 01.06.2011
(51) Int. Cl.: C04B 35/117, C04B 35/593, C04B 35/80, A47B 88/04, A47L 15/50, B29C 70/26, C22C 29/02, C22C 29/12, C22C 29/14, C22C 29/16, C22C 29/18, C22C 32/00, F25D 25/02, F24C 15/16, C22C 29/00

(54) **Auszugsführung und Verfahren zur Herstellung einer Auszugsführung**

(30) Priorität: 17.06.2010 DE 102010017438
(62) Teilanmeldung aus: 11725391.4
(71) Anmelder: Paul Hettich GmbH & Co. KG, 32278 Kirchlengern (DE)
(72) Erfinder: Rehage, Daniel, 33611 Bielefeld (DE); Krause, Arthur, 32312 Lübbecke (DE); Grigat, Willi, 33332 Gütersloh (DE); Schrubke, Lars, 32278 Kirchlengern (DE); Jährling, Peter, 32257 Bünde (DE); Sobolewski, Uwe, 32257 Bünde (DE)
(74) Vertreter: Dantz, Jan Henning

(57) **Zusammenfassung**

Auszugsführung, insbesondere für einen Beschlag, ein Möbel und/oder ein Haushaltsgerät, welches ein Formteil aus einem hartstoffhaltigen Verbundwerkstoff, einem metallkeramischen Verbundwerkstoff und/oder einem Hartstoff aufweist, sowie Verfahren zu dessen Herstellung und ein Beschlag, ein Möbel und/oder ein Haushaltsgerät.

## Beschreibung

Die Erfindung betrifft eine Auszugsführung nach dem Oberbegriff des Anspruchs 1, ein Verfahren zu dessen Herstellung einer Auszugsführung nach dem Oberbegriff des Anspruchs 6, ein Möbel und ein Haushaltsgerät.

Bisher wurden auf dem Gebiet der Beschläge beschichtete Edelstähle mit hartstoffhaltigen Verbundmaterial-Beschichtungen eingesetzt, wie sie u.a. in der DE 10 2010 016 911.0 nachveröffentlicht sind. Edelstähle zeichnen sich im Bereich der Beschläge besonders durch ihre Zähigkeit und Korrosionsbeständigkeit aus. Allerdings ist die Verwendung von Edelstählen beispielsweise im Bereich der Hochtemperatur-Anwendungen aufgrund von Verzunderungseffekten problematisch. Edelstahl ist zudem ein relativ teuerer Ausgangsstoff für die Produktion von Beschlägen.

Die DE 199 51 689 C1 offenbart in ein Führungsgitter für Backöfen, welche als Formkörper aus Kunststoff, Metall, Graphit oder keramischen Werkstoffen gefertigt sind. Auf diese Formkörper kann optional zur Erhöhung der Festigkeit eine Beschichtung aus einem hochtemperaturfesten und harten Werkstoff aufgebracht werden (Hartstoffbeschichtung).

Die DE 1 629 426 offenbart einen Schichtpressstoff mit einer aus Harzmasse bestehenden Oberflächenschicht, welche zusätzlich Hartstoffe wie Diamant Titancarbid und dergleichen aufweist.

Die AT 350 285 offenbart ebenfalls verschiedene Gebrauchsgegenstände, welche mit einer Hartstoffbeschichtung versehen sind.

Schließlich offenbart die WO 2009/135148 A2 eine Heizkörperbeschichtung aus einem carbidhaltigen Beschichtungsmaterial.

All diese Dokumente offenbaren daher lediglich Beschichtungen, also dünne Materialschichten, welche im Fall einer Auszugsführung durch regelmäßigen Gebrauch abgetragen werden könnten. Weiterhin kann sich eine derartige Beschichtung beim Einsatz in Backöfen nach einiger Zeit von einem mechanisch hoch beanspruchten Bauteil lösen, da sich durch ständiges Erwärmen und Abkühlen Unterschiede in der Materialausdehnung zwischen der Beschichtung und dem beschichteten Grundkörper ergeben können.

Es ist Aufgabe der vorliegenden Erfindung eine Auszugsführung zu schaffen, welche eine hohe Kratzfestigkeit und Materialfestigkeit auch bei längerem Gebrauch und bei wechselnden Temperaturen aufweist.

Die Erfindung löst diese Aufgabe durch eine Auszugsführung mit den Merkmalen des Anspruchs 1 und ein Verfahren zur Herstellung einer Auszugsführung mit den Merkmalen des Anspruchs 6.

Dabei weist eine Auszugsführung erfindungsgemäß einen Formkörper auf, der aus einem Hartstoff besteht.

Die Auszugsführung kann beispielsweise in jeder Art von Möbeln zum Einsatz kommen, besonders bevorzugt jedoch in Haushaltsgeräten, insbesondere der so genannten Weißen Ware, wie z.B. Kühlschränken, Backöfen, ggf. auch mit Pyrolysereinigung, Eistruhen, Waschmaschinen, Geschirrspülmaschinen, Wäschetrocknern und dergleichen.

Dabei kann auf die Verwendung von Edelstahl in Auszugsführungen verzichtet werden, was zu einem erheblichen Preisvorteil und ggf. auch zu einem Vorteil beim Transport durch geringere Masse führt. Eine Schädigung der Oberfläche hat, im Vergleich zu Beschichtungen, keine Auswirkungen auf das darunterliegende Material des Formkörpers. Die Lebensdauer des erfindungsgemäßen Bauteils ist gegenüber beschichteten Edelstahl-Formkörpern deutlich höher.

Weitere vorteilhafte Ausführungsvarianten sind Gegenstand der Unteransprüche.

Es ist von Vorteil, wenn der Formkörper eine Vickershärte von größer als 300 HV10 (300 = Härtewert, HV=Verfahren und 10=Prüfkraft in Kilopond), vorzugsweise zwischen 500-1000 HV10, besonders bevorzugt zwischen 600-750 HV10 aufweist. Diese Härte gewährleistet vorteilhaft eine erhöhte Kratzfestigkeit der Oberfläche des Formkörpers.

Für die Verwendung des Bauteils im Backofenbereich ist es von Vorteil, wenn der Schmelzpunkt des Formkörpers größer als 300 °C, vorzugsweise zwischen 400-1200 °C, besonders bevorzugt zwischen 500-700 °C, ist. Dies entspricht der Temperatur, die mit einem herkömmlichen Backofen erreicht wird. Das Bauteil kann allerdings auch in Pizzaöfen, die üblicherweise eine Temperatur von 400-500 °C aufweisen, über längere Zeit eingesetzt werden. Bei einigen Ausführungsvarianten der Bauteile ist selbst die Verwendung in Brennöfen mit Betriebstemperaturen von 1000-1100 °C gewährleistet.

Besonders bevorzugt zur Erhöhung der Kratzfestigkeit des Formkörpers sind Hartstoffe, ausgesucht aus einer Gruppe bestehend aus Carbiden, Nitriden, Boriden oder Siliciden. Insbesondere die Carbide, Nitride, Boride oder Silicide von hochschmelzenden Übergangsmetallen wie Titan, Tantal, Wolfram und Molybdän einschließlich ihrer Mischkristalle und Komplexverbindungen verstärken den Effekt der Kratzfestigkeit vorteilhaft.

Als Hartstoffe können zudem Korund, Fluorapatit oder Mischungen davon verwendet werden. Diese Hartstoffe sind natürlich vorkommend. Fluorapatit, ebenso wie Korund, ist gesundheitlich unbedenklich und kann bei Beschlägen eingesetzt werden, die im Lebensmittelbereich, beispielsweise in Backöfen oder in Kühlschränken, zum Einsatz kommen.

Die Reibung von gegeneinander beweglichen Bauteilen einer Auszugsführung kann durch ein Gleitmittel verringert werden.

Das erfindungsgemäße Bauteil genügt bevorzugt der Verordnung (EG) Nr. 1935/2004 des Europäischen Parlaments und des Rates vom 27. Oktober 2004 über Materialien und Gegenstände, die dazu bestimmt sind, mit Lebensmitteln in Berührung zu kommen und zur Aufhebung der Richtlinien 80/590/EWG und 89/109/EWG.

Erfindungsgemäß umfasst ein Verfahren zur Herstellung eines erfindungsgemäßen Bauteils eine Formgebung durch ein thermisches Spritzverfahren oder durch Biegen und Stanzen.

Die Art der Formgebung kann je nach Verbundmaterial variieren. So können viele hartstoffhaltige Metall-Verbundstoffe durch Biegen und Stanzen bearbeitet werden, wohingegen die Formgebung von hartstoffhaltigen keramischen Bauteilen vorzugsweise durch thermisches Spritzen erfolgen kann.

Die Erfindung wird nachfolgend anhand eines Ausführungsbeispiels mit Bezug auf die beigefügten Zeichnungen erläutert. Sie zeigen:

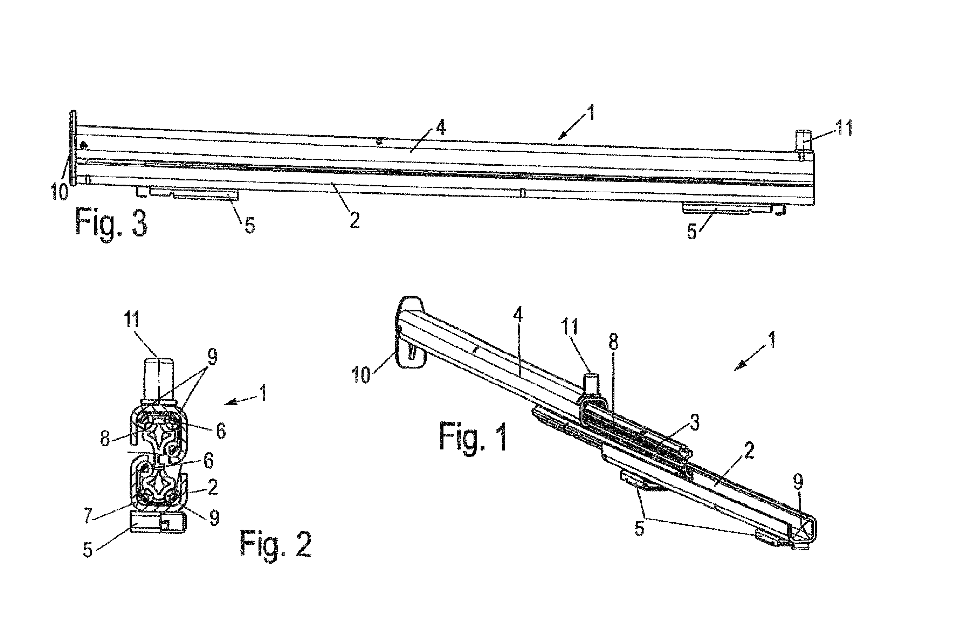

Figuren 1 bis 3 mehrere Ansichten eines Ausführungsbeispiels eines erfindungsgemäßen metallischen Bauteils, das als Beschlag in Form einer Auszugsführung ausgebildet ist.

Eine Auszugsführung 1 umfasst eine Führungsschiene 2, die an einem Seitengitter in einem Backofen, einer Seitenwand eines Backofens oder einem Möbelkorpus festlegbar ist. An der Führungsschiene 2 ist eine Mittelschiene 3 über Wälzkörper 6 verfahrbar gelagert. Die Mittelschiene 3 dient zur Lagerung einer Laufschiene 4. Zur Lagerung der Schienen 2, 3 und 4 sind an der Führungsschiene 2 und der Laufschiene 4 jeweils mindestens zwei, im Ausführungsbeispiel drei Laufbahnen 9 für Wälzkörper 6 ausgebildet. Die Wälzkörper 6 sind an einem Wälzkörperkäfig 7 als Einheit gehalten. Ferner sind an der Mittelschiene 3 insgesamt mindestens vier Laufbahnen, im Ausführungsbeispiel sechs Laufbahnen 8 für Wälzkörper 6 ausgebildet, wobei jeweils mindestens zwei Laufbahnen 8 der Führungsschiene 2 und mindestens zwei Laufbahnen 8 der Laufschiene 4 zugeordnet sind.

Zur Befestigung der Auszugsführung 1 an einem Seitengitter eines Backofens sind zwei Klammern 5 an der Führungsschiene 2 festgelegt. Auch andere Befestigungsmittel bzw. Befestigungsstellen können an der Führungsschiene 2 vorgesehen sein.

Die Führungsschiene 2, die Mittelschiene 3 und die Laufschiene 4 bestehen beispielsweise aus einer hartstoffhaltigen Keramik. Ein an der Laufschiene 4 festgelegter Stopfen 10 und ein Haltebolzen 11 sind beispielsweise ebenfalls aus diesem Material gefertigt. Die Mittelschiene 3, ist vollständig im Innenbereich der Auszugsführung 1 angeordnet, wenn sich die Laufschiene 4 in der eingefahrenen Position befindet. Dadurch können die Laufbahnen 8 durch das Material der Schienen 2, 3 und 4 gebildet sein, die Laufbahnen 8 und 9 werden beispielsweise aus einem hartstoffhaltigen Verbundwerkstoff durch thermisches Spritzen ausgeformt. Dadurch kann die Auszugsführung 1 besonders gut in einem Backofen eingesetzt werden, wobei über eine lange Lebensdauer eine hohe Laufgüte erreicht wird. In den Fig. 1 bis 3 ist ein Überauszug mit drei Schienen, 2, 3, und 4 gezeigt. Eine Ausführung mit mindesten drei Schienen als Vollauszug ist ebenfalls denkbar. Es ist auch möglich, die Auszugsführung als Teilauszug mit nur zwei Schienen (ohne die Mittelschiene 3) oder mit mehr als drei Schienen auszubilden.

Unter dem Begriff Bauteil sind im speziellen Bereich der Auszugsführungen zumindest die Schienen, insbesondere die Lauf- und Führungsschienen erfasst. Wälzkörper fallen nicht unter den Begriff der Bauteile oder Formkörper im Sinne der Anmeldung.

Als Bestandteile der erfindungsgemäßen Verbundstoffe kommen Holz, Gläser und Polymere, sowie insbesondere keramische Werkstoffe und Metalle in Frage, die in Verbindung mit Hartstoffschichten oder Hartstoffteilchen zu Schicht- und Teilchen-Verbundstoffen verarbeitet werden. Zu den Teilchen-Verbundstoffen gehören z.B. Hartmetalle und Keramiken. Im weiteren Sinne werden zu den Verbundstoffen des Formkörpers des erfindungsgemäßen Bauteils auch Faserverbundstoffe gerechnet.

Formkörper aus Hartstoffen werden bei Temperaturen von über 2000 °C ausgebildet. Hartstoffhaltige Verbundstoffe können besonders vorteilhaft bereits bei deutlich geringeren Temperaturen ausgeformt werden.

So reicht es beispielsweise bei thermischen Spritzverfahren, insbesondere beim Spritzguss bereits aus, die niedrigschmelzenden Anteile der Verbundstoffmatrix zu verflüssigen, wohingegen die meist höherschmelzenden Hartstoffbestandteile bereits durch die flüssige Verbundstoffmatrix mitgerissen werden und dabei homogen in der Schmelze verteilen.

Die Hartstoffe, welche im Formkörper enthalten sind, sind Stoffe, die aufgrund ihres spezifischen Bindungscharakters eine Vickers-Härte von größer als 1000 HV10 (1000 = Härtewert, HV=Verfahren und 10=Prüfkraft in Kilopond), vorzugsweise größer als 3000 HV10 aufweisen. Dabei liegt der Schmelzpunkt von Hartstoffen zumeist über 2000 °C. Hartstoffe sind, neben Korund, insbesondere auch Carbid-, Nitrid-, Borid- und Silicidverbindungen. Die wichtigsten Vertreter der Klasse der Hartstoffe sind Diamant, kubisch kristallines Bornitrid, Siliziumcarbid, Aluminiumoxid, Borcarbid, Wolframcarbid, Vanadiumcarbid, Titancarbid, Titannitrid und Zirconiumdioxid.

Alternativ oder zusätzlich kann das Verbundstoffmaterial auf Basis von einem metallkeramischen Verbundwerkstoff (Cermet) gebildet sein. Cermet ist eine mit Metallkeramik oder Kerametalle übersetzte Bezeichnung für eine Gruppe von Werkstoffen aus zwei getrennten Phasen mit einem metallischen und einem keramischen Bestandteil, die sich in Härte und Schmelzpunkt voneinander unterscheiden. Eine Erhöhung des keramischen Anteils hat eine Erhöhung der Härte, des Schmelzpunktes, der Wärmefestigkeit und der Zunderbeständigkeit zur Folge. Der metallische Anteil hingegen verbessert die Temperatur-Wechselbeständigkeit, die Zähigkeit und die Schlagfestigkeit des metallischen Bauteils.

Die Auszugsführung weist in einer besonders bevorzugten Ausführungsform, insbesondere für den Einsatz in Backöfen ggf. mit Pyrolysefunktion und Pizzaöfen einen oder mehrere Formkörper aus einem hartmetallhaltigen Verbundstoff auf, der einen Hochtemperatur-Werkstoff enthält. Dieses Bauteil in Form eines Beschlags kann bei Temperaturen von über 500 °C verwendet werden, also bei Temperaturen die in einem Backofen mit Pyrolysebetrieb vorherrschen, bei denen herkömmliche Beschläge z.T. zur Verzunderung neigen.

Bevorzugte Hochtemperatur-Werkstoffe sind dabei Al₂O₃, BeO, CaO, MgO, SiO₂, ThO₂ oder ZrO₂, sowie Kohlenstoff-Werkstoffe, insbesondere Kohle und Graphit. Letztere verfügen über eine niedrige Wärmeausdehnung bei gleichzeitig hoher Wärmeleitfähigkeit und die ausgezeichnete Temperatur-Wechselbeständigkeit. Weiterhin können auch Carbide, Nitride und Aluminide wie z.B. HfC, TaC, ZrC, SiC, Beryllium-, Bor-, Aluminium- und Siliziumnitride, sowie Aluminide der Metalle Nickel und Eisen als Hochtemperaturwerkstoffe eingesetzt werden.

Die Auszugsführung weist in einer weiteren besonders bevorzugten Ausführungsform, insbesondere für den Einsatz in Backöfen, Bauteile aus hartmetallhaltigem Verbundstoff, mit zumindest einer Keramik, insbesondere aus einer Hochleistungskeramik, auf.

Diese Keramik enthält dabei einen Volumenanteil von mehr als 30 % krist. Materialien. Die Hochleistungskeramik weist hochreine Oxide, Nitride, Carbide und Boride von genau definierter Zusammensetzung, Teilchenform und Teilchengrößenverteilung auf und wird als Pulver durch Pressen und Sintern zu Kompaktkörpern verarbeitet, wobei auf die optimale Gefügeeinstellung geachtet wird. Die mittlere Teilchengröße der Hartstoffe kann dabei zwischen 0,01-200 µm, vorzugsweise zwischen 0,1-20 µm liegen. Die Eigenschaften des Formkörpers des metallischen Bauteils bei Verwendung einer Hochleistungskeramik hängen wesentlich stärker vom Gefüge ab als bei metallischen Werkstoffen.

Bevorzugt enthalten hartstoffhaltige Hochleistungskeramiken Aluminiumoxid (Korund, Al₂O₃), Zirconiumdioxid (Zr0₂), Siliciumnitrid (Si₃N₄), Aluminiumnitrid (AIN), Siliciumcarbid (SiC), Borcarbid (B₄C) und Titandiborid (TiB₂). Beschläge aus einer Hochleistungskeramik sind hochtemperaturbeständig, korrosions- und verschleißfest. Sie besitzen Druckfestigkeit, Härte und Kriechfestigkeit sowie günstige Gleiteigenschaften bei gleichzeitig hoher thermischer und chemischer Beständigkeit. Zusätzlich können sie elektrische, magnetische und optische Funktionen übernehmen.

Die Hochleistungskeramik kann als Pulverzusammensetzung mit Hartstoffen versetzt werden und anschließend einem Formkörper ausgebildet werden. Dadurch wird eine definierte Korngrößenverteilung und eine definierte Oberfläche ermöglicht. Der Formkörper weist eine hohe Packungsdichte der Pulverteilchen in der Materialmatrix auf, was eine hohe Sinterdichte bei möglichst geringer Schrumpfung zur Folge hat.

Schlickergegossene Bauteile mit Hochleistungskeramiken können im Vergleich zu kaltgepressten Körpern ebenfalls eine höhere Packungsdichte und damit engere Porengrößenverteilung aufweisen.

Zur vorteilhaften Einstellung des Gefüges im hartstoffhaltigen Material mit überwiegendem Anteil aus Hochleistungskeramik sind hohe Sintertemperaturen und/oder hohe äußere Drücke notwendig, insbesondere um den korngrenzendiffusionskontrollierten Materialtransport bei verringertem Flüssigphasenanteil in z. B. Si₃N₄ und AIN-Keramiken zu beschleunigen. Um die Zersetzung von Si₃N₄ bei Sintertemperaturen über 1800 °C zu verhindern, wird dabei ein Gasdrucksintern mit einem N₂-Druck von 1 -10 MPa angewandt, das Sintertemperaturen über 2000 °C ermöglicht. Dadurch kann vorteilhaft das anisotrope Kornwachstum gezielt ausgenutzt und ein Gefüge mit geringem intergranularem Glasanteil aber hohem Streckungsgrad der Kristallisation erzeugt werden. Dadurch wird die Bruchzähigkeit und die Hochtemperaturfestigkeit des Bauteils zusätzlich verbessert.

Heißisostatische Pressverfahren für gekapselte bzw. vorgesinterte hartstoffhaltige Keramik-Verbundstoffe können ebenfalls angewandt werden. Dies erfolgt mit Gasdrücken von bis zu 200 MPa unter Ar-, N₂- oder O₂-Atmosphäre bei Temperaturen bis 2000 °C, um vorteilhaft eine vollständige Verdichtung der hartstoffhaltigen Verbundkeramiken zu ermöglichen. Durch Kombination von drucklosem Sintern, Gasdrucksintern sowie heißisostatischen Pressen in einem auf den jeweiligen Werkstoff optimierten Verdichtungsprozess gelingt es, homogenere Gefüge mit geringerem Kornwachstum, kleinerer Fehlergröße und höherer Dichte in hartstoffhaltigen Verbundstoffen aus Oxid- u. Nichtoxidkeramiken zu erzeugen.

Hartstoffhaltige Verbundwerkstoffe mit neuartigen Gefügen u. Eigenschaften können durch chemische Reaktionsverfahren erzeugt werden. Dabei können u.a. auch autokatalyt. Reaktionsverfahren (Al₂O₃/B₄C), Verdrängungsreaktionen (Al₂O ₃/TiN) und eutektische Kristallisation (Al₂0₃/Zr0₂), Reaktionen von organometallischen Verbindungen als (SiC/Si0₂) Polymer-Reaktionstechniken (Si₃N₄/SiC), Schmelzphasenfiltrationstechnik (Si/SiC) gerichtete Schmelzoxidierung (Al₂0₃/Al) sowie Gasphasenfiltration/-abscheidung (BN, SiC/SiC) genutzt werden.

Die Reaktionsverfahren bieten dahingehend Vorteile für den Formkörper eines metallischen Bauteils gegenüber den konventionellen Verfahren, da sie ausgehend von reinen Ausgangssubstanzen eine leichte Formgebung, geringe Schrumpfungen bzw. hohe Maßhaltigkeit und eine Verringerung von Gefügespannungen in hartstoffhaltigen Verbundwerkstoffen ermöglichen.

In einer weiteren besonders bevorzugten Ausführungsform, sind die Hartstoffteilchen des Verbundmaterials aus Korund, wobei das Verbundmaterial zusätzlich durch Fasern, vorzugsweise alpha-Aluminiumoxidfasern verstärkt ist. Dabei ist das Verbundmaterial auf besonders vorteilhafte Weise temperaturwechselbeständig, kratzfest und temperaturbeständig bei Temperaturen von bis zu 800 °C. Derartige Bauteile und Beschläge können in Backöfen mit Pyrolysebetrieb eingesetzt werden.

Bei der vorteilhaften Verwendung von Korund als Hartstoff wird dieses Material pulverisiert und gemahlen mit einem Massenanteil von 8-25 % eines Bindemittels aus Ton, Quarz oder einem Polymer, angefeuchtet im Spritz- oder Extrudierverfahren zu einem Formteil verarbeitet und bei 1300 -1400 °C gebrannt. Dabei sintern die einzelnen Bestandteile zu einem einheitlichen harten Verbundstoff zusammen.

In die Korund-Bindemittel-Masse, als besonders bevorzugte Ausführungsvariante eines hartstoffhaltigen Verbundwerkstoffes, kann zusätzlich alpha-Aluminiumoxidfasern (Saphibres) zugegeben werden und im Anschluss kann diese Masse durch Extrusion zu einem Formteil ausgebildet werden.

Alternativ kann ein Bestandteil des besonders bevorzugten hartstoffhaltigen Verbundstoffmaterials eine Magnesiumoxidkeramik sein, welche mit Hartstoffteilchen versetzt wurde. Magnesiumoxid-Keramik ist ein aus Magnesiumoxid (Periklas) oder Magnesiumaluminat (Spinell) gesinterter Werkstoff. Der Schmelzpunkt eines derartigen Bauteils liegt oberhalb von 1500 °C, so dass ein derartiges Bauteil, beispielsweise als Beschlag selbst in Sinteröfen und dergl. einsetzbar ist.

Ein derartes Bauteil ist für Spezialanwendungen in der Feuerfestindustrie, z.B. in Muffelöfen oder im metallurgischen Gebiet, geeignet. Dabei weist die MgObasierte Ausführungsvariante des Bauteils eine sehr hohe Korrosionsbeständigkeit, insbesondere auch im basischen Milieu auf. Magnesiumoxid kann auch in anderen Keramikmaterialien zur Ausbildung von Formkörpern, beispielsweise in Al₂O₃-Keramiken, eingesetzt werden, um dort vorteilhaft das Kornwachstum während des Sinterns zu behindern.

In einer weiteren Ausführungsvariante weist der Formkörper einen keramischen Verbundwerkstoff mit Zirconiumoxid auf.

Weiterhin kann ein Verbundwerkstoff metallartigen Nitride als Hartstoffe aufweisen. Besonders bevorzugt sind dabei Nitride der Übergangsmetalle wie VN, CrN, W₂N, bei denen die Stickstoff-Atome die Hohlräume der Metallstruktur besetzen und in Aussehen, Härte und elektrischer Leitfähigkeit metallischen Charakter aufweisen. Neben der Härte kann somit ein metallisches Erscheinungsbild des Bauteils geschaffen werden. Ein Verbundstoff mit Nitriden als Hartstoffe kann hergestellt werden, indem in eine Chromstahl-Schmelze unter N₂-Druck bis zu einem Massenanteil von 1,8 % Stickstoff, unter Bildung von Eisennitrid-Hartstoffen, eingebracht werden und dadurch mit der Metallmatrix einen metallischen Verbundwerkstoff mit einer höheren Festigkeit, gegenüber dem herkömmlichen Chromstahl herstellbar ist.

Kovalente Nitride, die als Hartstoffe für den Verbundwerkstoff in Betracht kommen, sind hauptsächlich mit Elementen der 13. Gruppe gebildet, wie BN, AIN, InN, GaN u. Si₃N₄. Der daraus hergestellte hartstoffhaltige Verbundstoff-Formkörper ist chemisch beständig. Die Nitride, die als Hartstoff-Komponenten im Verbundstoff des Formkörpers vorliegen, werden vorzugsweise durch Festkörperreaktionen hergestellt.

In einer besonders bevorzugten Ausführungsvariante weist der Formkörper des Bauteils Aluminiumnitrid als Hartstoffkomponente auf. Dieser Hartstoff verfügt über sehr gute Wärmeleitfähigkeit und Festigkeit bei geringer Wärmeausdehnung und kann z.B. in Keramik-Formkörpern im Verbund mit Silicium- und Bornitrid besonders bevorzugt verwendet werden.

In einer weiteren Ausführungsvariante können Carbide als Hartstoff-Komponente in einem Verbundwerkstoff eingesetzt werden. Kovalente Carbide und metallische Carbide sind dabei besonders bevorzugt als Hartstoffe. Dies umfasst Verbindungen des Kohlenstoffs mit Nichtmetallen, deren Bindungspartner weniger elektronegativ ist als Kohlenstoff (Borcarbid, Siliciumcarbid), sowie nichtstöchiometrische Verbindungen von Übergangsmetallen mit Kohlenstoff mit Legierungscharakter. Diese sind gegen Säuren beständig. Dabei befinden sich die relativ kleinen Kohlenstoff- Atome in den Lücken des Metallgitters.

Die Bildung von Carbid auf der Oberfläche eines metallischen Bauteils bzw. Beschlagsbauteils kann durch Reaktion von elementarem Kohlenstoff oder Gasen, die Kohlenstoff abgeben, mit der metallischen Oberfläche der metallischen Ausgangsstoffe vor der Formgebung bei 1200 -2300 °C erfolgen. Diese Carburierung wird vorzugsweise unter Schutzgas oder im Vakuum durchgeführt.

In einer bevorzugten Ausführungsvariante der Erfindung können als Hartstoffteilchen im Formkörper eines Bauteils Borcarbid oder Siliziumcarbid eingesetzt werden. Als Hartstoffe für den Verbundwerkstoff kommen zudem Boride als nichtstöchiometrische Verbindungen aus Bor und einem Metall in Betracht, die pulvermetallurgisch oder durch Reaktion der Metalloxide mit Borcarbid herstellbar sind.

Bevorzugt bei der Verwendung als Borid-Hartstoffe im Formkörper ist Titandiborid.

In einer weiteren erfindungsgemäßen Ausführungsvariante kann das Verbundstoffmaterial vorwiegend aus metallkeramischem Verbundstoffmaterial, Cermet, bestehen. Zur Herstellung eines Cermet vermischt man eine keramische Pulverzusammensetzung mit Metallpulvern, verpresst das Gemisch unter hohem Druck zu einem Formkörper und sintert in neutraler oder schwach saurer reduzierender Atmosphäre.

Besonders vorteilhaft zur Herstellung eines Bauteils, beispielsweise eines Beschlags, der hohen mechanischen Belastungen ausgesetzt ist, sind faserverstärkte hartstoffhaltige Werkstoffe. Derartigen Belastungen sind beispielsweise Auszugsführungen im Ofenbereich ausgesetzt, auf denen ein Gargutträger aufliegt.

Zur besseren Kraftverteilung bei punktueller Belastung kann der hartstoffhaltige Verbundstoff-Formkörper auch vorteilhaft faserverstärkt sein. Besonders vorteilhaft sind dabei sogenannte biomorphe keramische Werkstoffe auf der Basis von cellulosehaltigen Ausgangsmaterialien. Ausgangsstoffe für die Fasern können natürliche Hölzer oder Holzwerkstoffe sein. Natürliche Hölzer zeichnen sich durch ihre mechanisch effizienten Pflanzenfaser-Bauweisen aus. Zur Herstellung von SiC-Keramiken aus Hölzern oder Holzwerkstoffen zur Verwendung für Formkörper in Beschlagsbauteilen kann das Verfahren der Flüssigsilicierung (LSI- Prozess) verwendet werden. Dazu wird der Holzwerkstoff in einem ersten Schritt unter Inertgasbedingungen pyrolysiert. Der dabei entstehende zelluläre oder poröse Kohlenstoff-Formkörper (C-Template) wird anschließend mit flüssigem Silicium infiltriert. Das Silicium reagiert dabei mit dem Kohlenstoff zu Siliciumcarbid. Je nach Ausgangswerkstoff und Prozessführung lassen sich dichte oder poröse (Si-C-) SiC-Keramiken herstellen, die sehr unterschiedliche Mikrostrukturen - und damit auch sehr unterschiedliche Eigenschaften - aufgrund der variablen Gefügegestaltung aufweisen.

Eine weitere bevorzugte Ausführungsvariante zur Formgebung eines Formkörpers aus einem hartstoffhaltigen Verbundwerkstoff, einem metallkeramischen Verbundwerkstoff und/oder einem Hartstoff ist das thermische Spritzverfahren durch Flammspritzen, Explosionsspritzen, Lichtbogenspritzen, Plasmaspritzen oder Plasmaspritzen im Vakuum.

Besonders bevorzugt sind Verbundwerkstoffe, welche aus einer keramischen Matrix aufgebaut sind und zusätzlich eine Faserverstärkung aufweisen. Diese Faserverstärkung wird beispielsweise durch Einlagerung von Fasermatten oder Faserbündel oder durch Wickelverfahren von Fasern ermöglicht.

Die Fasern können aus jedem temperatur-resistenen organischen oder anorganischen Material bestehen. Insbesondere sind die Fasern jedoch ebenfalls aus einem keramischen Material, z.B. aus Glasfasern.

Durch eine schwache Faser-Matrix Anbindung des faserverstärkten Verbundstoffmaterials wird eine höhere Duktilität und eine höhere Thermoschockbeständigkeit des Verbundstoffs gegenüber rein monolithischen Keramikmaterialien erreicht.

Als Materialien für eine keramische Matrix ist eine poröse Keramik oder eine Oxidkeramik besonders vorteilhaft geeignet, da eine Oxidkeramik auch bei höheren Temperaturen in sauerstoffhaltiger Atmosphäre seine Eigenschaften im Wesentlichen beibehält und eine poröse Keramik eine besonders hohe Duktilität durch lediglich lokale Faser-/Matrix-Kontakte erreicht.

Die Faserverstärkung kann vorzugsweise während des thermischen Spritzens in die keramische Matrix eingebettet werden oder durch Pressverfahren in die Matrix eingebracht werden.

Diese bevorzugte Variante von faserverstärkten Verbundstoffen findet besonders bevorzugt im Bereich von Auszugsführungen und Gargutträgern für Hochtemperaturanwendungen, beispielsweise in Öfen mit Temperaturen von über 250 °C Verwendung, wo die enthaltenen Hartstoffe eine hohe und gleichbleibende Kratzfestigkeit ermöglicht und die Faserverstärkung mögliche Mikrorisse bei schnellem Abkühlen verhindert.

Oftmals wird der Ofen vorgeheizt, so dass die Auszugsführungen im Ofen bereits Temperaturen zwischen 250-300 °C aufweisen, bevor ein Gargutträger, beispielsweise ein Backblech bei -15 bis 25 °C in den Ofen eingeführt wird.

Neben der Auszugsführung ist auch der Gargutträger als Bauteil vorzugsweise in einem Backofen ggf. mit Pyrolysereinigung erfasst.

Aufgrund der besonders hohen Temperaturschockstabilität kann die heiße Auszugsführung auch mit kalten Gargutträgern in Berührung kommen, ohne dass Spannungsrisse im Formkörper auftreten. Auch das Absetzen von heißen Gargutträgern aus dem Backofen auf kaltem Untergrund, beispielsweise Küchenfliesen führt nicht zu Materialrissen im Formkörper des Gargutträgers.

### Bezugszeichenliste

- 1: Auszugsführung
- 2: Führungsschiene
- 3: Mittelschiene
- 4: Laufschiene
- 5: Klammer
- 6: Wälzkörper
- 7: Wälzkörperkäfig
- 8: Laufbahnen
- 9: Laufbahnen
- 10: Stopfen
- 11: Haltebolzen

## Patentansprüche

1. Auszugsführung, welche einen Formkörper einem Hartstoff aufweist.

2. Auszugsführung nach Anspruch 1, **dadurch gekennzeichnet, dass** der Formkörper eine Vickershärte von größer als 300 HV10, vorzugsweise zwischen 500-1000 HV10, besonders bevorzugt zwischen 600-750 HV10 aufweist.

3. Auszugsführung nach Anspruch 1 oder 2, **dadurch gekennzeichnet dass** der Schmelzpunkt des Formkörpers größer als 300 °C, vorzugsweise zwischen 400-1200 °C, besonders bevorzugt zwischen 500-700 °C, ist.

4. Auszugsführung nach einem der vorhergehenden Ansprüche, **dadurch gekennzeichnet, dass** der Hartstoff, ausgesucht ist aus einer Gruppe bestehend aus Carbiden, Nitriden, Boriden oder Siliciden.

5. Auszugsführung nach einem der vorhergehenden Ansprüche, **dadurch gekennzeichnet, dass** der Hartstoff Korund, Fluorapatit, Siliziumnitrid und/oder Molybdänsilicid aufweist.

6. Verfahren zur Herstellung einer Auszugsführung nach einem der vorhergehenden Ansprüche, **dadurch gekennzeichnet dass** eine Formgebung durch thermisches Spritzen oder mechanisches Ausformen, beispielsweise Biegen und Stanzen, erfolgt.

7. Auszugsführung, **dadurch gekennzeichnet, dass** in der Auszugsführung zumindest ein Bauteil nach einem der vorhergehenden Ansprüche angeordnet ist.

8. Haushaltsgerät, insbesondere Kühlschrank, Spülmaschine oder Backofen, **dadurch gekennzeichnet, dass** im oder an dem Haushaltsgerät zumindest eine Auszugsführung nach einem der vorhergehenden Ansprüche angeordnet ist.

9. Möbel, **dadurch gekennzeichnet, dass** im oder an dem Möbel eine Auszugsführung nach einem der vorhergehenden Ansprüche angeordnet ist
